# EUROPÄISCHE PATENTSCHRIFT

(11) **EP 3 790 698 B1**
(45) Veröffentlichungstag und Bekanntmachung des Hinweises auf die Patenterteilung: **22.07.2026**
(21) Anmeldenummer: 19722016.3
(22) Anmeldetag: 24.04.2019
(51) Int. Cl.: B23D 59/00, B27B 27/04

(54) **PLATTENAUFTEILSÄGE, VERFAHREN ZUM BETREIBEN EINER WERKSTÜCKBEARBEITUNGSANLAGE, SOWIE STEUERUNGSEINRICHTUNG**
PLATE CUTTING SAW, METHOD FOR OPERATING A WORKPIECE PROCESSING SYSTEM, AND CONTROL DEVICE
SCIE À PANNEAUX, PROCÉDÉ POUR FAIRE FONCTIONNER UNE INSTALLATION D'USINAGE DE PIÈCES, ET DISPOSITIF DE COMMANDE

(30) Priorität: 07.05.2018 DE 102018110941
(43) Veröffentlichungstag der Anmeldung: 17.03.2021
(73) Patentinhaber: HOMAG Plattenaufteiltechnik GmbH, 75365 Calw (DE)
(72) Erfinder: HARTMANN, Gerhard, 72224 Ebhausen-Rotfelden (DE); WIRTH, Sven, 71263 Weil der Stadt (DE); GALAMBOS, Christian, 72189 Voehringen (DE)
(74) Vertreter: DREISS Patentanwälte PartG mbB
(86) Internationale Anmeldenummer: PCT/EP2019/060526
(87) Internationale Veröffentlichungsnummer: WO 2019/214947

(56) Entgegenhaltungen:
- CH-A- 536 698
- DE-A1- 102004 054 670
- DE-C1- 19 716 971
- DE-U1- 20 108 813
- US-A- 4 541 722

## Beschreibung

Die Erfindung betrifft eine Plattenaufteilsäge, sowie ein Verfahren zum Betreiben einer Plattenaufteilsäge, und eine Steuerungseinrichtung nach den Oberbegriffen der nebengeordneten Ansprüche. Solchen Plattenaufteilsäge, Verfahren und Steurungseinrichtung sind aus dem Dokument DE 201 08 813 U1 bekannt.

Vom Markt her bekannt sind Werkstückbearbeitungsanlagen in Form von Plattenaufteilsägen. Mit diesen können großformatige rechteckige plattenförmige Werkstücke beispielsweise für die Zwecke der Möbelindustrie in kleinere Werkstücke aufgeteilt werden. Hierzu verfügt die Plattenaufteilsäge über einen Zuführtisch, einen Maschinentisch, in dessen Bereich die eigentliche Sägeeinrichtung angeordnet ist, sowie einen Entnahmetisch. Seitlich von den besagten Tischen ist eine sich geradlinig erstreckende Anlageeinrichtung in Form eines Winkellineals angeordnet, an das ein - ebenfalls sich möglichst geradlinig erstreckender - seitlicher Rand eines aufzuteilenden Werkstücks angelegt werden kann. Hierdurch soll eine gewünschte Ausrichtung des Werkstücks relativ zur Sägeeinrichtung erreicht werden.

Die EP 2 253 442 A1 beschreibt eine Bearbeitungsvorrichtung und ein Bearbeitungsverfahren zur Bearbeitung von plattenförmigen Werkstücken. Ein in der Bearbeitungsvorrichtung vorhandenes Werkstück kann mittels Messeinrichtungen vermessen werden. Diese können jeweils die schmalen Seitenflächen des Werkstücks messen und sind hierzu im Bereich einer Ausrichteinrichtung angeordnet. Das DE 201 08 813 U1 beschreibt eine Vorrichtung zum Handhaben von Sägegut, bei der auf einem Greifer eines Roboters Laserentfernungsmesser angeordnet sind. Die US 4 541 722 A 25 offenbart ein System, mit dem Kanthölzer in Bretter gesägt werden können, mit Kameras, die von oben auf das Kantholz blicken. Die DE 197 16 971 C1 beschreibt eine Abbundanlage mit einem kontaktierenden Sensor zur Erfassung der Strecke, die ein Balken in Richtung seiner Längsachse bewegt wird.

Aufgabe der vorliegenden Erfindung ist es, eine Plattenaufteilsäge, ein Verfahren zu deren Betrieb sowie eine Steuerungseinrichtung bereitzustellen, welche eine effiziente und qualitativ hochwertige Bearbeitung eines Werkstücks gestatten.

Diese Aufgabe wird erfindungsgemäß durch eine Plattenaufteilsäge, ein Verfahren zum Betreiben einer Plattenaufteilsäge sowie eine Steuerungseinrichtung mit den Merkmalen des jeweiligen nebengeordneten Anspruchs gelöst. Vorteilhafte Weiterbildungen der Erfindung sind in Unteransprüchen angegeben. Darüber hinaus finden sich für die Erfindung wesentliche Merkmale in der nachfolgenden Beschreibung und in der beigefügten Zeichnung. Dabei können diese Merkmale für die Erfindung sowohl in Alleinstellung als auch in unterschiedlichen Kombinationen wesentlich sein.

Eine erfindungsgemäße Plattenaufteilsäge umfasst zunächst einen Auflagetisch zum Auflegen eines vorzugsweise plattenförmigen Werkstücks. Der Auflagetisch kann dabei auf ganz unterschiedliche Arten und Weisen ausgestaltet sein, beispielsweise kann er eine Mehrzahl von Rollenbahnen oder einen Luftkissentisch umfasst. Seitlich von dem Auflagetisch ist eine Anlageeinrichtung zum Anlegen eines Rands des Werkstücks vorhanden. Diese Anlageeinrichtung ist als sich geradlinig erstreckende Anlageleiste ausgebildet. Eine solche Anlageleiste wird bei Plattenaufteilsäge auch als Winkellineal bezeichnet, wo ein solches Winkellineal in einem ganz bestimmten Winkel, meist exakt 90°, relativ zu einer Sägelinie angeordnet ist. Dabei kann die Anlageeinrichtung aus einem durchgehenden Element bestehen, oder aus einer Mehrzahl von in einer geraden Linie angeordneten Segmenten.

Erfindungsgemäß wird vorgeschlagen, dass die Plattenaufteilsäge mindestens eine Sensoreinrichtung umfasst, welche einen Abstand mindestens eines seitlichen Randbereichs des Werkstücks von mindestens einem Bezugsbereich der Anlageeinrichtung erfasst oder ermittelt. Bei dem Bezugsbereich der Anlageeinrichtung kann es sich beispielsweise um eine zum seitlichen Randbereich des Werkstücks hin weisende Anlagefläche der Anlageeinrichtung handeln. Der Abstand wird ferner vorzugsweise orthogonal zur Längserstreckung der Anlageeinrichtung ermittelt. Die Sensoreinrichtung ist mindestens bereichsweise in die Anlageeinrichtung integriert. Dies erleichtert die Montage sowie die Einstellung bzw. Kalibrierung, gestattet auch die Nachrüstung bei bereits existierenden Plattenaufteilsägen, und schützt die Sensoreinrichtung vor Beschädigungen.

Zu der Erfindung gehört auch ein Verfahren zum Betreiben der oben beschriebenen Plattenaufteilsäge, wobei ein Abstand mindestens eines seitlichen Randbereichs des Werkstücks von mindestens einem Bezugsbereich der Anlageeinrichtung mittels einer Sensoreinrichtung erfasst oder ermittelt wird, wobei der erfasste oder ermittelte Abstand in einer Auswerteeinrichtung ausgewertet wird und wobei abhängig vom Ergebnis der Auswertung eine Aktion erfolgt.

Der Erfindung liegt die Überlegung zugrunde, dass im Normalfall, also bei einem optimal ausgebildeten Werkstück und bei einer optimalen Positionierung des Werkstücks, dieses mit einem seitlichen Rand direkt und kontinuierlich und somit spaltfrei an der Anlageeinrichtung anliegt. Mittels der erfindungsgemäßen Sensoreinrichtung kann genau dies überprüft und gegebenenfalls sogar quantifiziert werden. Durch die Erfassung bzw. Ermittlung des Abstands des seitlichen Randbereichs des Werkstücks von mindestens einem Bezugsbereich der Anlageeinrichtung kann nämlich festgestellt werden, ob der besagte Rand tatsächlich in der gewünschten optimalen Weise an der Anlageeinrichtung anliegt oder nicht. Durch die Erfindung wird es somit ermöglicht, sowohl geometrische Fehler am Werkstück bzw. an dessen seitlichem Rand als auch eine fehlerhafte Positionierung des Werkstücks, welche beide zu einem wenigstens bereichsweise vorhandenen Spalt zwischen dem seitlichen Randbereich des Werkstücks und der Anlageeinrichtung führen, auf einfache Art und Weise zu erkennen.

Dabei ist der Begriff "seitlich" als eine Position zu verstehen, die in einer Förderrichtung des auf dem Auflagetisch liegenden Werkstücks gesehen seitlich vom Werkstück liegt. Der Begriff "Randbereich" bezeichnet einen Bereich des zu der Anlageeinrichtung weisenden Rands des Werkstücks und kann sowohl einen eher punktartigen Bereich als auch einen linienhaften Bereich des Rands oder den gesamten Rand umfassen. Der "Bezugsbereich" der Anlageeinrichtung wiederum ist in vielen Fällen die zum Werkstück weisende Oberfläche der Anlageeinrichtung, kann aber auch eine andere Stelle bzw. Ebene der Anlageeinrichtung oder der Plattenaufteilsäge sein, welche eine Aussage darüber möglich, ob und wie der Randbereich des Werkstücks relativ zu der Anlageeinrichtung angeordnet bzw. ausgerichtet ist.

Ferner wird vorgeschlagen, dass die Sensoreinrichtung ganz allgemein einen berührungslosen Sensor, insbesondere einen akustischen Sensor, beispielsweise einen Ultraschallsensor, einen optischen Sensor, beispielsweise einen Infrarotsensor, einen Lasersensor, einen Tastsensor, beispielsweise in Form eines Weggebers, einen induktiven Sensor und/oder eine Bildverarbeitungseinrichtung, beispielsweise eine Kamera, umfasst. Auch beliebige Kombinationen der gerade erwähnten Typen von Sensoreinrichtungen sind möglich. Die erwähnten Sensoreinrichtungen haben den Vorteil, dass sie preiswert sind, präzise Messergebnisse liefern und im Betrieb robust sind.

Eine weitere Weiterbildung der erfindungsgemäßen Plattenaufteilsäge zeichnet sich dadurch aus, dass die Sensoreinrichtung in einer Förderrichtung gesehen vor einem Bearbeitungsbereich angeordnet ist. Dies gestattet es, noch vor der Bearbeitung des Werkstücks, also an einem Ausgangswerkstück, den Abstand mittels der Sensoreinrichtung zu ermitteln bzw. zu erfassen, so dass erforderlichenfalls noch vor der Bearbeitung eine Korrekturmaßnahme durchgeführt und auf diese Weise doch noch ein zufriedenstellendes Bearbeitungsergebnis erhalten werden kann. Alternativ kann von vornherein die Bearbeitung unterlassen werden, wodurch Zeit gespart wird.

Alternativ oder zusätzlich hierzu ist es möglich, dass die Sensoreinrichtung in einer Förderrichtung gesehen hinter einem Bearbeitungsbereich angeordnet ist. Diese Positionierung der Sensoreinrichtung gestattet eine Qualitätskontrolle an dem bearbeiteten Werkstück, so dass dieses im Hinblick auf die Qualität beispielsweise qualifiziert werden kann, und gegebenenfalls, wenn festgestellt wird, dass die Istqualität zu stark von einer Sollqualität abweicht, dass erzeugte Werkstück als Ausschuss ausgesondert werden kann.

Bei einer Weiterbildung des erfindungsgemäßen Verfahrens wird vorgeschlagen, dass der Abstand durch die Sensoreinrichtung erfasst oder ermittelt wird, während zwischen Werkstück und Sensoreinrichtung keine Relativbewegung stattfindet. Bevorzugt ist dabei, dass sowohl Werkstück als auch Sensoreinrichtung stationär sind und sich also nicht bewegen. Diese Kombination ermöglicht eine Prozessüberwachung während des Ausrichtens, der Aufteilung und dem Materialtransport. Dies erleichtert die Auswertung und auch die Ansteuerung. Erkannt werden kann auf diese Art und Weise vor allem dann, wenn die Sensoreinrichtung in einer Förderrichtung gesehen vor einem Bearbeitungsbereich angeordnet ist, eine fehlerhafte Positionierung des Werkstücks, beispielsweise eine Schräglage eines seitlichen Rands des Werkstücks relativ zu der Anlageeinrichtung. Möglich ist aber auch, dass der Abstand mehrmals erfasst oder ermittelt wird, wobei sich zwischen den Messungen das Werkstück und die Sensoreinrichtung relativ zueinander bewegen und die Bewegung dann zur Durchführung der Messung angehalten wird. Auf diese Weise kann auch ein stückweiser Abstandsverlauf erhalten werden, der beispielsweise einen Rückschluss auf den Umfang der Schräglage zulässt, oder der eine Qualifizierung der Geradheit bzw. der Krümmung des seitlichen Rands gestattet.

Möglich ist bei dem erfindungsgemäßen Verfahren aber auch, dass der Abstand durch die Sensoreinrichtung erfasst oder ermittelt wird, während sich das Werkstück und die Sensoreinrichtung relativ aneinander vorbeibewegen. Bei dieser Ausgestaltung des erfindungsgemäßen Verfahrens kann man einen kontinuierlichen oder zumindest durch punktweise Werte gestützten Verlauf des Abstands des seitlichen Randbereichs des Werkstücks zu dem Bezugsbereich erhalten, was eine sehr präzise Quantifizierung der Schräglage des Werkstücks und/oder eine sehr präzise Kenntnis von der Nicht-Geradheit des seitlichen Rands des Werkstücks gestattet.

Eine weitere vorteilhafte Ausgestaltung des erfindungsgemäßen Verfahrens sieht vor, dass die automatisch, also ohne Zutun einer Person, ausgelöste und/oder ausgeführte Aktion mindestens eine aus der durch die nachfolgenden Aufzählungspunkte gebildeten Gruppe ist:
- Veranlassen einer Handhabung des Werkstücks: Dies kann als Reaktion auf erkannte geometrische Fehler sowohl vor einem Bearbeitungsvorgang als auch nach einem Bearbeitungsvorgang erfolgen und beispielsweise ein Drehen, Verschieben und/oder Ausrichten des Werkstücks mittels einer entsprechenden Handhabungseinrichtung, beispielsweise eines Roboters, oder manuell durch eine Bedienperson beinhalten, und/oder eine erneute oder spezielle Bearbeitung des Werkstücks beinhalten. Selbst während des Bearbeitungsvorgangs kann durch eine entsprechende Handhabung noch reagiert werden, indem beispielsweise das Werkstück nachpositioniert, beispielsweise mit erhöhter Kraft gegen die Anlageeinrichtung gedrückt wird.

Die Handhabung kann auch bedeuten, dass beispielsweise aufgrund eines erkannten unzulässig krummen seitlichen Rands des Werkstücks ein sogenannter "Spannungsfreischnitt" veranlasst wird. Dem liegt zugrunde, dass beispielsweise bei Spanplatten während deren Produktion durch die Abkühlung innere Spannungen innerhalb der Platte entstehen können, die dazu führen können, dass sich das Werkstück bei der Aufteilung verzieht. Durch das Einbringen eines Schlitzes und das Heraustrennen eines Streifens, in dem der Schlitz liegt, kann ein Werkstück von den internen Spannungen wenigstens weitgehend befreit werden, so dass bei einer anschließenden Aufteilung die Gefahr, dass krumme seitliche Randabschnitte entstehen, reduziert wird. Ferner kann die Handhabung bedeuten, dass ein Ausrichtvorgang des Werkstücks relativ zu der Anlageeinrichtung und/oder relativ zu einem Spannzangengrund wiederholt wird, indem beispielsweise das Werkstück nochmals gegen die Anlageeinrichtung und/oder gegen den Spannzangengrund gedrückt wird. Hierzu kann eine spezielle Ausrichtvorrichtung vorgesehen sein, es kann aber auch eine ohnehin vorgesehene Handhabungseinrichtung, beispielsweise ein Roboter mit einer Saugtraverse, hierfür eingesetzt werden.

Wird erkannt, dass der seitliche Rand unzulässig krumm ist, kann auch veranlasst werden, dass das Werkstück um 90° gedreht wird und geprüft wird, ob der dann zu der Anlageeinrichtung hin weisende seitliche Rand ausreichend gerade ist. Im Ergebnis kann hierdurch die Qualität der erzeugten Werkstücke erhöht und die Anzahl der nicht verwendbaren Werkstücke (Ausschuss) reduziert werden. Auch können geringer qualifizierte Bedienpersonen eingesetzt werden, wodurch Kosten reduziert werden können.
- Ausgabe einer Information an eine Bedienperson: Die Information kann beispielsweise beinhalten, dass an die Bedienperson dann, wenn eine Fehlpositionierung des Werkstücks oder ein unzulässig gekrümmter seitlicher Randabschnitt des Werkstücks erkannt wurden, eine Warnmeldung und/oder eine konkrete Instruktion ausgegeben wird, beispielsweise akustisch in Form eines Piepstons, in Form einer Sprachausgabe, oder optisch durch Aufleuchten eines Warnlichts oder Ausgabe eines Textes an einer entsprechenden Anzeige. Möglich ist aber auch, dass dann, wenn die Auswertung ergibt, dass das Werkstück korrekt liegt und einen ausreichend geraden seitlichen Randabschnitt hat, dies ebenfalls als Information an die Bedienperson ausgegeben wird.

Auch kann an die Bedienperson als Information eine exakte Angabe zum Umfang einer Fehlpositionierung oder einer Krümmung des seitlichen Randes ausgegeben werden, und es können entsprechende konkrete Handlungsanweisungen an die Bedienperson ausgegeben werden, beispielsweise als Text oder als Sprache, die es ihr erleichtern, ein vorhandenes Problem zu beheben oder ein drohendes Problem zu vermeiden, beispielsweise, indem die Bedienperson die oben erwähnten Spannungsfreischnitte veranlasst.

Die Ausgabe der Information ist direkt bei der Plattenaufteilsäge möglich, sie kann alternativ oder zusätzlich aber beispielsweise auch per Bluetooth oder WLAN an eine direkt bei der Bedienperson vorhandene Anzeigeeinrichtung ausgegeben werden, beispielsweise eine von der Bedienperson getragene Smartwatch oder an einen von der Bedienperson getragenen Kopfhörer. Insbesondere bei einer Smartwatch kann die Ausgabe der Informationen zumindest auch haptisch, beispielsweise als Vibrationssignal, erfolgen.
- Speichern eines Qualitätsmerkmals des Werkstücks: Dies ist besonders von Vorteil für die Protokollierung des Herstellungsprozesses, was die Bearbeitung späterer Reklamationen erleichtert. Als Qualitätsmerkmal kommt beispielsweise ein Absolutwert eines Krümmungsradius des Rands infrage, und/oder ein relativer Wert des Krümmungsradius, beispielsweise relativ zu einem Grenzwert, oder eine Abweichung eines Abstands zwischen zwei Rändern, oder ähnliches.

Das Qualitätsmerkmal kann unmittelbar in einem Speicher der Plattenaufteilsäge gespeichert werden, es kann aber auch in eine externe Datenbank gespeichert werden, beispielsweise eine Cloud. Auf diese Weise steht das Qualitätsmerkmal beispielsweise einem übergeordneten Qualitätssystem zur Verfügung, welches den kompletten Bearbeitungsprozess des Werkstücks überwacht und es ermöglicht, einen Fehler im Reklamationsfall bis zu dem Bearbeitungsschritt, in dem der Fehler erzeugt wurde, zurückzuverfolgen. Zusätzlich zu dem Qualitätsmerkmal kann auch mindestens ein Prozessparameter abgespeichert werden, wodurch Zusammenhänge zwischen Prozessparametern und Qualitätsmerkmalen erkennbar und nachverfolgbar gemacht werden.
- Anbringen einer Information an dem Werkstück: Diese Information kann beispielsweise ein Qualitätsmerkmal umfassen, wie oben erwähnt beispielsweise ein die Krümmung eines Rands betreffendes Qualitätsmerkmal. Auch können beispielsweise die Toleranzen des Werkstücks sowie die Prozessparameter, die zur Herstellung des Werkstücks verwendet werden, in der Information enthalten sein. Die Information kann beispielsweise mittels eines Klebeetiketts auf das Werkstück aufgebracht werden, und sie kann dort beispielsweise leicht auslesbar in Form eines Barcodes oder eines QR-Codes vorhanden sein.
- Veranlassen, dass das Werkstück ausgeschleust wird: Dies gestattet beispielsweise eine Nachbehandlung eines Werkstücks, dessen Rand als unzulässig krumm erkannt wurde, so dass dieses später wieder für eine Bearbeitung verwendet werden kann. Hierdurch wird eine hohe Bearbeitungsqualität sichergestellt, bei gleichzeitig geringem Materialverbrauch.
- Deklarieren des Werkstücks als Ausschuss: Dies kommt vor allem dann infrage, wenn eine Nachbehandlung aufgrund einer zu hohen Überschreitung der zulässigen Grenzwerte keinen Erfolg verspricht. Dies ist beispielsweise dann der Fall, wenn ein unzulässig krummer Rand bei einem bearbeiteten Werkstück festgestellt wurde. Auch hierdurch wird die Bedienperson entlastet, da die Aktion automatisiert auf der Basis des Messergebnisses durch die Sensoreinrichtung erfolgen kann.
- Veranlassen, dass ein Werkstück nachproduziert wird. Dies dürfte vor allem im Zusammenhang mit dem obigen Aufzählungspunkt "Deklarieren des Werkstücks als Ausschuss" interessant sein. Auch hierdurch wird die Bedienperson erheblich entlastet, weil das Nachproduzieren automatisiert durchgeführt werden kann. Dies kann soweit automatisiert sein, dass von einer Steuerungseinrichtung der Plattenaufteilsäge dann, wenn ein bearbeitetes Werkstück als Ausschuss deklariert wurde, automatisch ein neuer Bearbeitungsplan erstellt bzw. ein bestehender Bearbeitungsplan modifiziert wird, so dass automatisch das als Ausschuss deklarierte Werkstück nachproduziert wird, ohne dass ein manueller Eingriff durch die Bedienperson, beispielsweise eine manuelle Neuprogrammierung oder Anpassung des Bearbeitungsplans, notwendig ist.
- Erstellen eines geometrischen Profils eines Rands des Werkstücks. Ein solches geometrisches Profil kann in vielfacher Hinsicht verwendet werden, beispielsweise wenn es darum geht, die Ursache für eine unerwünschte Krümmung eines Rands eines Werkstücks herauszufinden.

Insgesamt wird durch die oben vorgeschlagenen und automatisch eingeleiteten Aktionen die Prozesssicherheit bei der Bearbeitung von plattenförmigen Werkstücken erheblich gesteigert, und zwar insbesondere bei solchen plattenförmigen Werkstücken, bei denen eine tatsächliche Qualität von einer gewünschten Qualität in unzulässiger Weise abweicht. Dies macht sich besonders vorteilhaft bemerkbar bei solchen Plattenaufteilsägen, die weitgehend automatisch oder sogar vollautomatisch betrieben werden. Aber auch bei handbedienten Plattenaufteilsägen machen sich die oben erwähnten Vorteile bemerkbar. Dabei versteht es sich, dass ein Grenzwert, der beispielsweise definiert, dass ein Werkstück beispielsweise einen unzulässig gekrümmten Rand aufweist, von der Bedienperson frei gewählt oder als ein Prozessparameter von einer Steuerungseinrichtung abhängig von dem herzustellenden Werkstück automatisch, also ohne Beteiligung durch die Bedienperson, eingestellt werden kann. Die Definition der zulässigen Toleranzen kann also sehr flexibel und anwendungsbezogen gehandhabt werden.

Eine weitere vorteilhafte Weiterbildung des erfindungsgemäßen Verfahrens zeichnet sich dadurch aus, dass aus der Auswertung auf mindestens ein Qualitätsmerkmal aus der folgenden Gruppe geschlossen wird: Abweichung eines Istmaßes des Werkstücks von einem Sollmaß; Winkelfehler des Werkstücks; Abweichung eines Istverlaufs des Rands von einem Sollverlauf. Alle diese Qualitätsmerkmale sind anhand der erfindungsgemäß vorgeschlagenen Sensoreinrichtung und bei Durchführung des erfindungsgemäß vorgeschlagenen Verfahrens sehr einfach zu ermitteln und gestatten eine sehr gute Qualifizierung eines Werkstücks.

Zu der Erfindung gehört auch eine Steuerungseinrichtung zur Steuerung einer Plattenaufteilsäge der oben genannten Art, umfassend einen Speicher und einen Prozessor. Es wird vorgeschlagen, dass die Steuerungseinrichtung eingerichtet ist zur Steuerung des oben beschriebenen Verfahrens.

Nachfolgend wird die Erfindung unter Bezugnahme auf die beigefügte Zeichnung näher erläutert. In der Zeichnung zeigen:
- Figur 1: eine Draufsicht auf eine Werkstückbearbeitungsanlage in Form einer Plattenaufteilsäge;
- Figur 2: eine schematisierte Darstellung eines Bereichs der Plattenaufteilsäge von Figur 1 in einer ersten Betriebssituation; und
- Figuren 3-5: schematisierte Darstellungen eines Bereichs der Plattenaufteilsäge von Figur 1 in einer zweiten Betriebssituation zu verschiedenen Zeitpunkten.

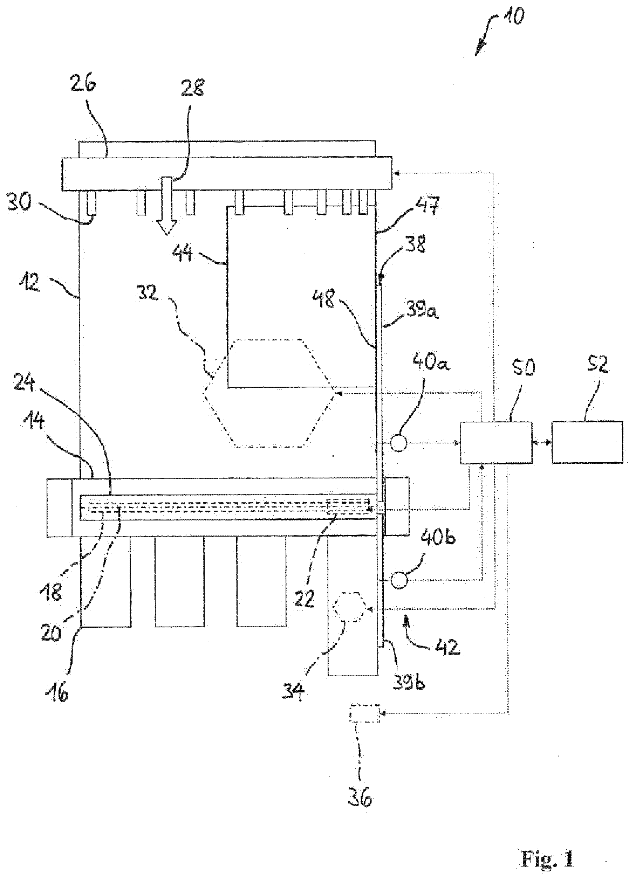

Figur 1 zeigt eine Werkstückbearbeitungsanlage in Form einer Plattenaufteilsäge. Die Werkstückbearbeitungsanlage trägt dabei insgesamt das Bezugszeichen 10. Sie umfasst einen ersten Auflagetisch in Form eines Zuführtisches 12, der vorliegend beispielhaft aus einer Mehrzahl von Rollenbahnen gebildet ist, einen zweiten Auflagetisch in Form eines sich an den Zuführtisch 12 anschließenden Maschinentisches 14 und einen dritten Auflagetisch in Form eines sich an den Maschinentisch 14 anschließenden Entnahmetisches 16. Letzterer ist vorliegend beispielhaft als Luftkissentisch ausgebildet und besteht vorliegend beispielhaft aus vier Segmenten, von denen aus Gründen der Einfachheit nur eines mit einem Bezugszeichen versehen ist.

Die Bearbeitung eines Werkstücks erfolgt im Bereich des Maschinentisches 14, in dem hierfür ein Sägeschlitz 18 vorhanden ist, der längs einer strichpunktiert dargestellten Sägelinie 20 verläuft. Unterhalb von dem Sägeschlitz 18 ist ein längs zur Sägelinie 20 verfahrbarer Sägewagen 22 vorhanden, der vorliegend beispielhaft zwei Sägeblätter (nicht gezeichnet) einer Hauptsäge und einer Vorritzsäge trägt. Oberhalb von der Sägelinie 20 ist ein Druckbalken 24 vorhanden, der während einer Bearbeitung eines Werkstücks auf dieses abgesenkt werden kann.

Zu der Werkstückbearbeitungsanlage 10 gehört ferner eine Fördereinrichtung vorliegend beispielhaft in Form eines portalartigen Programmschiebers 26, der motorisch in einer durch einen Pfeil 28 dargestellten Förderrichtung und zurück bewegt werden kann und der eine Mehrzahl von Spannzangen 30 trägt, von denen in Figur 1 aus Gründen der Übersichtlichkeit nur eine mit einem Bezugszeichen bezeichnet ist.

Ferner gehört zu der Werkstückbearbeitungsanlage 10 noch eine Handhabungseinrichtung 32, die vorliegend nur symbolisch durch ein strichpunktiert gezeichnetes Sechseck dargestellt ist und die beispielsweise eine Kombination aus einem Roboter mit einer Saugtraverse umfassen kann. Ebenfalls kann die Handhabungseinrichtung 32 eine Einrichtung umfassen, mit der ein beispielsweise auf dem Zuführtisch 12 liegendes Werkstück in Figur 1 nach rechts beaufschlagt werden kann.

Im Bereich des Entnahmetisches 16 ist ferner eine Etikettiereinrichtung 34 vorhanden, und ferner ist in Figur 1 unterhalb vom Entnahmetisch 16 noch eine Anzeigeeinrichtung 36 gezeichnet.

Ein wesentliches Element der Werkstückbearbeitungsanlage 10 ist eine seitlich von den drei Auflagetischen 12, 14 und 16 angeordnete Anlageeinrichtung 38 in Form eines vorliegend beispielhaft aus zwei Segmenten 39a und 39b bestehenden und sich geradlinig erstreckenden leistenartigen Winkellineals. Die Anlageeinrichtung 38 erstreckt sich dabei exakt orthogonal zur Sägelinie 20. Man erkennt aus Figur 1, dass das eine Segment 39a der Anlageeinrichtung 38 vor allem seitlich vom ersten Auflagetisch 12 (Zuführtisch) und das zweite Segment 39b der Anlageeinrichtung 38 vor allem seitlich vom dritten Auflagetisch 16 (Entnahmetisch) angeordnet ist.

Seitlich vom ersten Auflagetisch 12 ist im Bereich des dortigen Segments 39a der Anlageeinrichtung 38 ein erster Sensor 40a vorhanden, und seitlich vom dritten Auflagetisch 16 ist im Bereich des dortigen Segments der Anlageeinrichtung 38 ein zweiter Sensor 40b vorhanden. Beide Sensoren 40a und 40b gehören zu einer Sensoreinrichtung 42. Der in Figur 1 obere Sensor 40a ist also in Förderrichtung 28 gesehen vor einem Bearbeitungsbereich (Sägelinie 20) angeordnet, wohingegen der in Figur untere Sensor 40b in Förderrichtung 28 gesehen hinter dem Bearbeitungsbereich (Sägelinie 20) angeordnet ist.

Bei den Sensoren 40a und 40b kann es sich beispielhaft um akustische Sensoren, optische Sensoren, Tastsensoren, induktive Sensoren oder um eine Bildverarbeitungseinrichtung in Form einer Kamera handeln, wobei auch Kombinationen der oben erwähnten Sensoren möglich sind. Man erkennt aus Figur 1, dass die Sensoren 40a und 40b im Bereich der Anlageeinrichtung 42 angeordnet sind. Vorzugsweise sind die Sensoren 40a und 40b dabei in die Anlageeinrichtung 38, also in das jeweilige Segment 39a bzw. 39b, integriert, beispielsweise in Aussparungen der Anlageeinrichtung 38 zumindest bereichsweise eingesetzt.

Wie weiter unten noch ausgeführt werden wird, kann mittels der Sensoren 40a und 40b der Sensoreinrichtung 42 ein Abstand eines seitlichen Randbereichs eines auf dem ersten Auflagetisch 12 bzw. auf dem dritten Auflagetisch 16 liegenden Werkstücks von einem Bezugsbereich der Anlageeinrichtung 38 orthogonal zur Erstreckung der Anlageeinrichtung 38 erfasst werden. Beispielhaft ist in Figur 1 ein entsprechendes Werkstück, welches auf dem ersten Auflagetisch 12 liegt und an seinem in Förderrichtung 28 gesehen hinteren Ende von Spannzangen 30 des Programmschiebers 26 gegriffen ist, gezeichnet und mit dem Bezugszeichen 44 versehen.

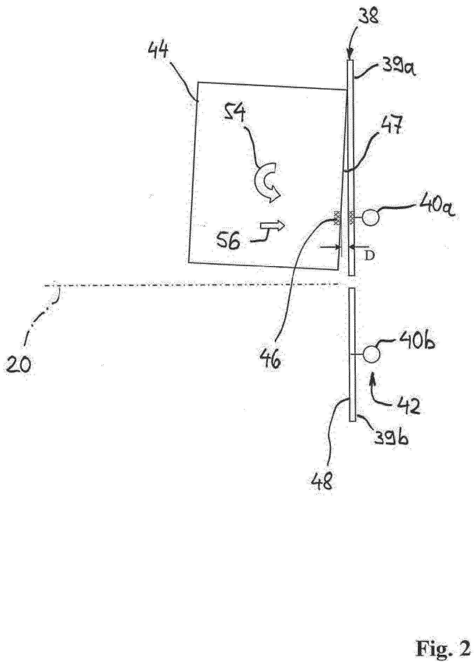

Ein seitlicher Randbereich dieses Werkstücks 44, der in Förderrichtung 28 gesehen auf Höhe des Sensors 40a liegt und zu der Anlageeinrichtung 38 hin weist und an dieser anliegt, trägt das Bezugszeichen 46 (nur in Figur 2 gezeichnet), und der zu der Anlageeinrichtung 38 hin weisende Rand (also die Werkstückkante) insgesamt trägt das Bezugszeichen 47. Der oben erwähnte Bezugsbereich ist beispielsweise die zum Werkstück 44 hin weisende Kontaktfläche der Anlageeinrichtung 38, die vorliegend das Bezugszeichen 48 trägt.

Zu der Werkstückbearbeitungsanlage 10 gehört auch noch eine Steuerungseinrichtung 50, bei der es sich beispielsweise um einen PC handeln kann. Die Steuerungseinrichtung 50 erhält Signale von zahlreichen Sensoren der Werkstückbearbeitungsanlage 10, so auch von den beiden Sensoren 40a und 40b der Sensoreinrichtung 42. Abhängig von den Signalen der Sensoren und abhängig von einem oder von mehreren Computerprogrammen, die in der Steuerungseinrichtung 50 abgespeichert sind, steuert die Steuerungseinrichtung 50 verschiedene Komponenten der Werkstückbearbeitungsanlage 10 an. Zu den angesteuerten Komponenten gehören beispielsweise der Programmschieber 26 und die Spannzangen 30, der Sägewagen 22 mit den auf diesem angeordneten Sägen, der Programmschieber 26, die Handhabungseinrichtung 32, die Etikettiereinrichtung 34 sowie die Anzeigeeinrichtung 36. Die Steuerungseinrichtung 50 kommuniziert ferner vorzugsweise bidirektional mit einem externen Speicher 52, bei dem es sich beispielsweise um einen Cloudspeicher handeln kann, und in dem Datensätze einer Datenbank gespeichert sind.

In einem normalen und optimalen Betrieb arbeitet die Werkstückbearbeitungsanlage 10 wie folgt: das Werkstück 44 wird beispielsweise mittels der Handhabungseinrichtung 32 auf den ersten Auflagetisch 12 gelegt, und zwar möglichst bereits so, dass sein geradliniger seitlicher Rand 47 spaltfrei und kontinuierlich an der Anlageeinrichtung 38 anliegt. Gegebenenfalls wird dies von einer nicht gezeichneten Andrückvorrichtung unterstützt.

Dann wird das Werkstück 44 an seinem hinteren Rand von den Spannzangen 30 gegriffen und schrittweise in Richtung Maschinentisch 14 bewegt. Dort wird es in einer gewünschten Weise relativ zu der Sägelinie 20 positioniert, dann der Druckbalken 24 abgesenkt, und dann von dem Werkstück 44 ein erstes beispielsweise streifenförmiges Werkstück abgetrennt, das dann auf dem dritten Auflagetisch 16 zum Liegen kommt. Dieser Vorgang wiederholt sich so oft, bis das Werkstück 44 ("Ausgangswerkstück") vollständig aufgeteilt ist.

Da, wie oben erwähnt, die Längserstreckung der Anlageeinrichtung 38 exakt orthogonal zur Längserstreckung der Sägelinie 20 ist, werden auf diese Weise rechteckige aufgeteilte und beispielsweise streifenförmige Werkstücke erzeugt. Diese haben exakt gerade Seitenränder, die exakt orthogonal zueinander sind.

Tatsächlich kann es jedoch vorkommen, dass der Betrieb der Werkstückbearbeitungsanlage 10 nicht, wie oben beschrieben, optimal abläuft. Stattdessen kann es Situationen geben, auf die nun unter Bezugnahme auf die Figuren 2-5 eingegangen werden wird.

Beispielsweise kann es, wie aus Figur 2 ersichtlich ist, sein, dass nach der Ablage des Werkstücks 44 auf dem ersten Auflagetisch 12 dieses mit seinem seitlichen Rand 47 nicht exakt und kontinuierlich an der Anlageeinrichtung 38 anliegt, sondern gegenüber der Anlageeinrichtung 38 verdreht ist und somit gegenüber dieser eine Schräglage aufweist. Daher wird, bevor das Werkstück 44 von den Spannzangen 30 ergriffen und mittels des Programmschiebers 26 zum Maschinentisch 14 hin bewegt wird, bei stationärem Werkstück 44 mittels des Sensors 40a der Sensoreinrichtung 42 ein Abstand D des seitlichen Randbereichs 46 (in Figur 2 gepunktet gezeichnet) von der Kontaktfläche 48 der Anlageeinrichtung 38 erfasst. Idealerweise, bei vollständig und kontinuierlich an der Anlageeinrichtung 38 anliegendem Rand 47 des Werkstücks 44, ist der Wert des Abstandes D gleich Null. Man erkennt aus Figur 2, das vorliegend, bei einem schrägen Werkstück 44, der Abstand des Randbereichs 46 größer ist als Null.

Der von der Sensoreinrichtung 42 ermittelte Abstand D wird nun von der Steuerungseinrichtung 50 ausgewertet, und abhängig vom Ergebnis der Auswertung erfolgt eine Aktion. Insoweit kann die Steuerungseinrichtung 50 auch als Auswerteeinrichtung bezeichnet werden. Liegt der Abstand D beispielsweise oberhalb von einem vorgegebenen Grenzwert, wird die Handhabungseinrichtung 32 von der Steuerungseinrichtung 50 so angesteuert, dass das Werkstück 44 vorliegend entgegen dem Uhrzeigersinn etwas gedreht wird (Pfeil 54 in Figur 2), und anschließend wird das Werkstück 44 nochmals gegen die Anlageeinrichtung 38 gedrückt (Pfeil 56 in Figur 2). Die Fehlstellung des Werkstücks 44 relativ zur Anlageeinrichtung 38 wird auf diese Weise beseitigt, so dass das Werkstück 44 mit seinem seitlichen Rand 47 kontinuierlich und spaltfrei an der Kontaktfläche 48 der Anlageeinrichtung 38 anliegt. Nun kann es von den Spannzangen 30 gegriffen und, wie oben beschrieben, mittels des Programmschiebers 26 bewegt und mittels der Sägen aufgeteilt werden.

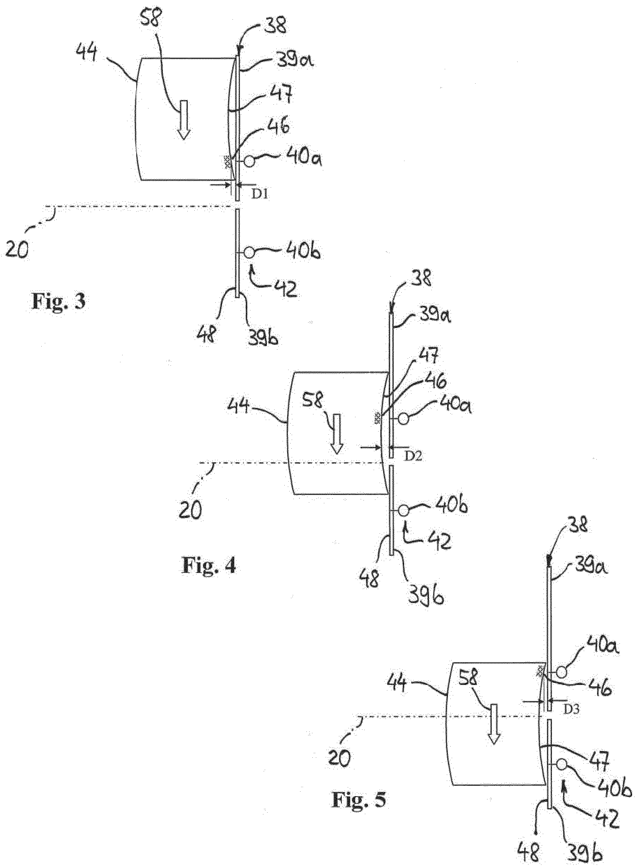

Wie aus den Figuren 3-5 ersichtlich ist, kann es aber noch einen weiteren "nicht-optimalen" Betriebsfall geben: beispielsweise kann es sein, dass das auf dem ersten Auflagetisch 12 abgelegte Werkstück 44 keine exakt rechteckige Form hat, sondern eine sogenannte "Bananenform", bei der mindestens der zu der Anlageeinrichtung 38 hin weisende seitliche Längsrand 47 nicht wenigstens im Wesentlichen exakt gerade ist, sondern insgesamt oder auch nur abschnittsweise gekrümmt ist. Dies kann beispielsweise dann vorkommen, wenn bei der Herstellung des ursprünglichen Werkstücks, aus dem das Werkstück 44 entstanden ist, innerhalb des Werkstücks interne Spannungen erzeugt wurden, die dann, nach einer ersten Bearbeitung des ursprünglichen Werkstücks, zu einem Verzug des dann erhaltenen Werkstücks 44 führen.

Um einen solchen Fall erkennen zu können, ist es vorteilhaft, das Werkstück 44 während der Erfassung des Abstandes D mittels des Sensors 40a relativ zum Sensor 40a zu bewegen, entsprechend dem Pfeil 58 in den Figuren 3-5. Diese Bewegung kann beispielsweise mittels des Programmschiebers 26 als auch mittels der Handhabungseinrichtung 32 erzeugt werden. Das Werkstück 44 bewegt sich also während der Erfassung des Abstands D an dem Sensor 40a der Sensoreinrichtung 42 in Förderrichtung 28 (Figur 1) vorbei. Dies ist in den Figuren 3-5 dargestellt, die das Werkstück 44 zu unterschiedlichen Zeitpunkten während der Vorbeibewegung am Sensor 40a zeigen. Man erkennt, dass sich aufgrund des gekrümmten Randes 47 der Abstand D während der Bewegung des Werkstücks 44 kontinuierlich ändert, nämlich von einem Wert D1 in Figur 3 über einen Wert D2 in Figur 4 zu einem Wert D3 in Figur 5.

Aus der Strecke, die das Werkstück 44 an dem Sensor 40a in Förderrichtung 28 vorbei bewegt wurde und aus dem zugehörigen Verlauf des Abstands D kann durch eine entsprechende Auswertung in der Steuerungseinrichtung 50 eine Krümmung bzw. ein Krümmungsverlauf des Randes 47 des Werkstücks 44 ermittelt werden. Auch hier kann die durch Auswertung ermittelte Krümmung mit einem vorgegebenen Grenzwert verglichen werden, und abhängig vom Ergebnis des Vergleichs kann dann durch die Steuerungseinrichtung 50 eine Aktion ausgelöst werden.

Ist die Krümmung geringer als der Grenzwert, kann beispielsweise an der Anzeigeeinrichtung 36 als Information an eine Bedienperson ausgegeben werden, dass alles in Ordnung ist. Auch kann die ermittelte Krümmung als dem aktuellen Werkstück 44 zugeordnetes Qualitätsmerkmal in der Steuerungseinrichtung 50 abgespeichert und von dort an den externen Speicher 52 übertragen werden. Das Werkstück 44 kann dann ganz normal der Säge zur Aufteilung zugeführt werden, und das Qualitätsmerkmal kann zusätzlich mittels der Etikettiereinrichtung 34 in Form eines Etiketts auf das aufgeteilte Werkstück aufgebracht werden.

Ist die Krümmung dagegen größer als der Grenzwert, bedeutet dies, dass der Rand 47 unzulässig stark gekrümmt ist. Auch hier kann abhängig vom Ergebnis der Auswertung eine Aktion erfolgen. Beispielsweise kann eine Handhabung des Werkstücks veranlasst werden derart, dass dieses von der Handhabungseinrichtung 32 um 90° gedreht wird, so dass einer der geradlinigen Ränder (keine Bezugszeichen) des Werkstücks 44 in Anlage an die Anlageeinrichtung 38 kommt, und der krumme Rand 47 kann dann mittels der Säge abgetrennt werden. Möglich ist auch, dass über die Anzeigeeinrichtungen 36 eine entsprechende Handhabungsanweisung oder eine sonstige Information an eine Bedienperson ausgegeben wird.

Auch kann zu diesem speziellen Werkstück 44 die ermittelte Krümmung und deren Unzulässigkeit bzw. das ermittelte geometrische Profil des Randes 47 als Qualitätsmerkmal in der Steuerungseinrichtung 50 bzw. der Datenbank des externen Speichers 52 abgespeichert werden. Möglich ist auch, dass veranlasst wird, beispielsweise mittels der Handhabungseinrichtung 32, dass das Werkstück 44 ohne eine weitere Bearbeitung ausgeschleust wird.

Man erkennt aus den Figuren 3-5, dass auch durch den zweiten Sensor 40b eine entsprechende Erfassung durchgeführt werden könnte, an einem dann bereits bearbeiteten Werkstück. Wird in einem solchen Fall ebenfalls ein Überschreiten der zulässigen Krümmung ermittelt, kann das so erzeugte Werkstück als Ausschuss deklariert werden. Es kann dann beispielsweise durch die Steuerungseinrichtung 50 automatisch ein Schnittplan so abgeändert werden, dass das als Ausschuss deklarierte Werkstück automatisch nachproduziert wird.

Aus der durch die Steuerungseinrichtung 50 vorgenommenen Auswertung kann auf eine Reihe von Qualitätsmerkmalen geschlossen werden bzw. es können solche ermittelt werden: beispielsweise kann eine Abweichung eines Istmaßes des Werkstücks 44 von einem Sollmaß erkannt werden. Auch können Winkelfehler des Werkstücks 44 erkannt werden, denn die Ränder des Werkstücks 44 sind bei dem in den Figuren 3-5 dargestellten Werkstück 44 nicht mehr orthogonal zueinander. Auch kann eine Abweichung des Istverlaufs des Randes 47 von einem Sollverlauf ermittelt werden, und, entsprechend der Betriebssituation von Figur 2, kann eine Abweichung einer Istposition von einer Sollposition des Werkstücks 44 ermittelt werden.

## Patentansprüche

1. Plattenaufteilsäge (10), mit mindestens einem Auflagetisch (12, 14, 16) zum Auflegen eines vorzugsweise plattenförmigen Werkstücks (44) und mit einer seitlich von dem Auflagetisch (12, 14, 16) vorhandenen Anlageeinrichtung (38) zum Anlegen eines Rands (47) des Werkstücks (44), wobei die Anlageeinrichtung (38) als Winkellineal ausgebildet ist, welches in einem ganz bestimmten Winkel relativ zu einer Sägelinie (20) angeordnet ist, **dadurch gekennzeichnet, dass** die Plattenaufteilsäge (10) mindestens eine Sensoreinrichtung (42) umfasst, welche einen Abstand (D) mindestens eines Randbereichs (46) des Werkstücks (44) von mindestens einem Bezugsbereich (48) der Anlageeinrichtung (38) erfasst oder ermittelt, und dass die Sensoreinrichtung (42) mindestens bereichsweise in die Anlageeinrichtung (38) integriert ist.

2. Plattenaufteilsäge (10) nach Anspruch 1, **dadurch gekennzeichnet, dass** die Sensoreinrichtung (42) einen akustischen Sensor, einen optischen Sensor, einen Lasersensor, einen Tastsensor, einen induktiven Sensor und/oder eine Bildverarbeitungseinrichtung umfasst.

3. Plattenaufteilsäge (10) nach wenigstens einem der vorhergehenden Ansprüche, **dadurch gekennzeichnet, dass** die Sensoreinrichtung (42) in einer Förderrichtung (28) gesehen vor einem Bearbeitungsbereich (20) angeordnet ist.

4. Plattenaufteilsäge (10) nach wenigstens einem der vorhergehenden Ansprüche, **dadurch gekennzeichnet, dass** die Sensoreinrichtung (42) in einer Förderrichtung (28) gesehen hinter einem Bearbeitungsbereich (20) angeordnet ist.

5. Verfahren zum Betreiben einer Plattenaufteilsäge (10) nach einem der vorhergehenden Ansprüche, **dadurch gekennzeichnet, dass** ein Abstand (D) mindestens eines Randbereichs (46) des Werkstücks (44) von mindestens einem Bezugsbereich (48) der Anlageeinrichtung (38) mittels der mindestens bereichsweise in die Anlageeinrichtung (38) integrierten Sensoreinrichtung (42) erfasst oder ermittelt wird, dass der erfasste oder ermittelte Abstand (D) in einer Auswerteeinrichtung (50) ausgewertet wird und dass abhängig vom Ergebnis der Auswertung automatisch eine Aktion ausgelöst wird.

6. Verfahren nach Anspruch 5, **dadurch gekennzeichnet, dass** der Abstand (D) durch die Sensoreinrichtung (42) erfasst oder ermittelt wird, während zwischen Werkstück (44) und Sensoreinrichtung (42) keine Relativbewegung stattfindet.

7. Verfahren nach wenigstens einem der Ansprüche 5 oder 6, **dadurch gekennzeichnet, dass** der Abstand (D) durch die Sensoreinrichtung (42) erfasst oder ermittelt wird, während sich das Werkstück (44) und die Sensoreinrichtung (42) relativ aneinander vorbeibewegen.

8. Verfahren nach wenigstens einem der Ansprüche 5-7, **dadurch gekennzeichnet, dass** die Aktion mindestens eine aus der folgenden Gruppe ist: Veranlassen einer Handhabung des Werkstücks (44), insbesondere eines erneuten Ausrichtens des Werkstücks (44), eines Drehens des Werkstücks (44) und/oder eines Verschiebens des Werkstücks (44); Veranlassen, dass das Werkstück (44) ausgeschleust wird; Deklarieren des Werkstücks (44) als Ausschuss; Veranlassen, dass ein Werkstück (44) nachproduziert wird.

9. Verfahren nach wenigstens einem der Ansprüche 5-8, **dadurch gekennzeichnet, dass** aus der Auswertung auf mindestens ein Qualitätsmerkmal aus der folgenden Gruppe geschlossen wird: Abweichung eines Istmaßes des Werkstücks (44) von einem Sollmaß; Winkelfehler des Werkstücks (44); Abweichung eines Istverlaufs des Rands (47) von einem Sollverlauf; Abweichung einer Istposition des Werkstücks (44) von einer Sollposition.

10. Steuerungseinrichtung (50) zur Steuerung einer Plattenaufteilsäge (10) nach einem der Ansprüche 1 bis 4, umfassend einen Speicher und einen Prozessor, **dadurch gekennzeichnet, dass** die Steuerungseinrichtung (50) eingerichtet ist zur Steuerung des Verfahrens nach einem der Ansprüche 5 bis 9.

## Claims

1. Panel dividing saw (10) comprising at least one support table (12, 14, 16) on which to lay a preferably panel-shaped workpiece (44) and comprising a placement device (38) against which to place an edge (47) of the workpiece (44), which placement device is located laterally from the support table (12, 14, 16), wherein the placement device (38) is in the form of an adjustable set square which is arranged at a very specific angle relative to a saw line (20), **characterized in that** the panel dividing saw (10) comprises at least one sensor device (42) which detects or ascertains a distance (D) of at least one edge region (46) of the workpiece (44) from at least one reference region (48) of the placement device (38), and **in that** the sensor device (42) is integrated at least in regions into the placement device (38).

2. Panel dividing saw (10) according to claim 1, **characterized in that** the sensor device (42) comprises an acoustic sensor, an optical sensor, a laser sensor, a touch sensor, an inductive sensor, and/or an image processing device.

3. Panel dividing saw (10) according to at least one of the preceding claims, **characterized in that** the sensor device (42) is arranged in front of a processing region (20) when viewed in a conveying direction (28).

4. Panel dividing saw (10) according to at least one of the preceding claims, **characterized in that** the sensor device (42) is arranged behind a processing region (20) when viewed in a conveying direction (28).

5. Method for operating a panel dividing saw (10) according to any of the preceding claims, **characterized in that** a distance (D) of at least one edge region (46) of the workpiece (44) from at least one reference region (48) of the placement device (38) is detected or ascertained by means of the sensor device (42) integrated at least in regions into the placement device (38), **in that** the detected or ascertained distance (D) is evaluated in an evaluation device (50), and **in that** depending on the result of the evaluation, an action is automatically triggered.

6. Method according to claim 5, **characterized in that** the distance (D) is detected or ascertained by the sensor device (42) while the workpiece (44) and the sensor device (42) are not moving relative to each other.

7. Method according to at least one of claims 5 or 6, **characterized in that** the distance (D) is detected or ascertained by the sensor device (42) while the workpiece (44) and the sensor device (42) move past each other relative to each other.

8. Method according to at least one of claims 5-7, **characterized in that** the action is at least one from the following group: causing the workpiece (44) to be handled, in particular causing the workpiece (44) to be realigned, causing the workpiece (44) to be rotated, and/or causing the workpiece (44) to be moved; causing the workpiece (44) to be rejected; declaring the workpiece (44) to be scrap; causing a workpiece (44) to be re-produced.

9. Method according to at least one of claims 5-8, **characterized in that** the evaluation indicates at least one quality characteristic from the following group: a deviation of an actual dimension of the workpiece (44) from a target dimension; an angular error of the workpiece (44); a deviation of an actual profile of the edge (47) from a target profile; a deviation of an actual position of the workpiece (44) from a target position.

10. Control device (50) for controlling a panel dividing saw (10) according to any of claims 1 to 4, comprising a memory and a processor, **characterized in that** the control device (50) is configured to control the method according to any of claims 5 to 9.

## Revendications

1. Scie de découpage de panneaux (10), comportant au moins une table de pose (12, 14, 16) pour le dépôt d'une pièce (44) de préférence en forme de panneau et comportant un dispositif d'appui (38) présent latéralement par rapport à la table de pose (12, 14, 16) pour l'appui contre un bord (47) de la pièce (44), dans laquelle le dispositif d'appui (38) est conçu comme une règle angulaire qui est disposée selon un angle entièrement déterminé par rapport à une ligne de sciage (20), **caractérisée en ce que** la scie de découpage de panneaux (10) comprend au moins un dispositif à capteur (42) qui détecte ou détermine une distance (D) d'au moins une zone de bord (46) de la pièce (44) par rapport à au moins une zone de référence (48) du dispositif d'appui (38), et **en ce que** le dispositif à capteur (42) est intégré au moins dans certaines zones dans le dispositif d'appui (38).

2. Scie de découpage de panneaux (10) selon la revendication 1, **caractérisée en ce que** le dispositif à capteur (42) comprend un capteur acoustique, un capteur optique, un capteur laser, un capteur tactile, un capteur inductif et/ou un dispositif de traitement d'images.

3. Scie de découpage de panneaux (10) selon au moins l'une des revendications précédentes, **caractérisée en ce que** le dispositif à capteur (42) est disposé en amont d'une zone d'usinage (20), vu dans une direction de transport (28).

4. Scie de découpage de panneaux (10) selon au moins l'une des revendications précédentes, **caractérisée en ce que** le dispositif à capteur (42) est disposé en aval d'une zone d'usinage (20), vu dans une direction de transport (28).

5. Procédé permettant de faire fonctionner une scie de découpage de panneaux (10) selon l'une des revendications précédentes, **caractérisé en ce qu'**une distance (D) d'au moins une zone de bord (46) de la pièce (44) par rapport à au moins une zone de référence (48) du dispositif d'appui (38) est détectée ou déterminée au moyen du dispositif à capteur (42) intégré au moins dans certaines zones dans le dispositif d'appui (38), **en ce que** la distance (D) détectée ou déterminée est évaluée dans un dispositif d'évaluation (50) et **en ce qu'**une action est déclenchée automatiquement en fonction du résultat de l'évaluation.

6. Procédé selon la revendication 5, **caractérisé en ce que** la distance (D) est détectée ou déterminée par le dispositif à capteur (42) alors qu'aucun mouvement relatif n'a lieu entre la pièce (44) et le dispositif à capteur (42).

7. Procédé selon au moins l'une des revendications 5 ou 6, **caractérisé en ce que** la distance (D) est détectée ou déterminée par le dispositif à capteur (42) pendant que la pièce (44) et le dispositif à capteur (42) se déplacent l'un par rapport à l'autre.

8. Procédé selon au moins l'une des revendications 5 à 7, **caractérisé en ce que** l'action est au moins une action choisie dans le groupe suivant: provoquer une manipulation de la pièce (44), en particulier un nouvel alignement de la pièce (44), une rotation de la pièce (44) et/ou un déplacement de la pièce (44); provoquer l'évacuation de la pièce (44); déclarer la pièce (44) comme rebut; provoquer la production ultérieure d'une pièce (44).

9. Procédé selon au moins l'une des revendications 5 à 8, **caractérisé en ce qu'**est déduite de l'évaluation au moins une caractéristique de qualité choisie dans le groupe suivant: écart d'une dimension réelle de la pièce (44) par rapport à une dimension de consigne; erreur angulaire de la pièce (44); écart d'une allure réelle du bord (47) par rapport à une allure de consigne; écart d'une position réelle de la pièce (44) par rapport à une position de consigne.

10. Dispositif de commande (50) pour la commande d'une scie de découpage de panneaux (10) selon l'une des revendications 1 à 4, comprenant une mémoire et un processeur, **caractérisé en ce que** le dispositif de commande (50) est configuré pour commander le procédé selon l'une des revendications 5 à 9.
